# FASCICULE DE BREVET EUROPEEN

(11) **EP 0 494 809 B1**
(45) Date de publication et mention de la délivrance du brevet: **13.11.1996**
(21) Numéro de dépôt: 92400018.5
(22) Date de dépôt: 06.01.1992
(51) Int. Cl.: G02B 6/255, G02B 6/38

(54) **Microsoudeuse pour fibres optiques et procédé de soudage à l'aide de cette microsoudeuse**
Spleissgerät für optische Fasern und Verfahren zum Schweissen mit Hilfe dieses Spleissgeräts
Splicing machine for optical fibres and process of splicing with this machine

(30) Priorité: 08.01.1991 FR 9100157
(43) Date de publication de la demande: 15.07.1992
(73) Titulaire: ALCATEL FIBRES OPTIQUES, F-95871 Bezons Cedex (FR)
(72) Inventeur: Hakoun, Roland, F-95330 Domont (FR); Godard, Gérard, F-93470 Noiseau (FR); Resbeut, Jean-Claude, F-95310 Saint Ouen L'Aumone (FR)
(74) Mandataire: Weinmiller, Jürgen

(56) Documents cités:
- EP-A- 0 237 426
- EP-A- 0 319 041
- DE-A- 3 538 563
- JOURNAL OF OPTICAL COMMUNICATIONS, vol. 10, no. 2, juin 1989, pp 61-66, Berlin, DE; A. ISHIKURA et. al.: "Mass splice method for single-mode fiber ribbons"
- PATENT ABSTRACTS OF JAPAN, vol. 11, no. 303 (P-622)(2750), 3 octobre 1987; & JP-A-62094803
- PATENT ABSTRACTS OF JAPAN, vol. 6, no. 265 (P-121)(1143), 24 décembre 1982; & JP-A-57158825
- PATENT ABSTRACTS OF JAPAN, vol. 6, no. 100 (P-121)(978), 9 juin 1982; & JP-A-57032411
- PATENT ABSTRACTS OF JAPAN, vol. 6, no. 225 (P-154)(1103), 10 novembre 1982; & JP-A-57129405

## Description

La présente invention concerne une microsoudeuse pour fibres optiques et un procédé de soudage utilisant cette microsoudeuse pour sa mise en oeuvre.

Le procédé classique de soudage en bout de deux fibres optiques comporte trois phases principales (cf. par exemple Journal of Optical Communications, Vol.10, N o 2, juin 1989, pages 61-66) :
- polissage des sections en regard des fibres optiques à souder,
- soudage proprement dit,
- phase de traction destinée à vérifier par étirage à froid de la soudure si l'allongement de cette dernière reste dans le domaine élastique (cas d'une bonne soudure), le domaine plastique étant infiniment petit et négligeable.

Un dispositif de soudage possible est décrit dans le brevet JP -57 129405. Ce dispositif comporte deux supports latéraux formant les branches d'un bâti en forme de U et dont un est mobile en flexion autour d'un axe horizontal orthogonal à l'axe longitudinal des fibres à souder. Chacun des supports latéraux est destiné à recevoir au moins une fibre optique à souder disposée le long de cet axe dans un vé de guidage prévu à cet effet sur le support. Le support mobile présente à sa base une partie amincie jouant le rôle de charnière et lui permettant ainsi d'effectuer des mouvements de flexion. Il est en contact permanent avec un crayon micrométrique s'appuyant sur une de ses faces verticales orthogonale à l'axe longitudinal des fibres.

Pour effectuer la soudure, les fibres sont alors positionnées avec leurs extrémités à souder en regard les unes des autres, et un arc est généré entre deux électrodes au niveau du raccord entre les fibres. Simultanément, le crayon micrométrique est mis en rotation de manière à permettre l'interpénétration des fibres durant la soudure puis leur traction une fois la soudure effectuée.

Un tel dispositif n'est pas satisfaisant, car les déplacements obtenus au moyen du crayon micrométrique ne sont pas suffisamment précis pour assurer une bonne qualité de la soudure.

Le but de la présente invention est donc de réaliser une microsoudeuse permettant un positionnement préalable à la soudure et un déplacement précis des fibres pendant et après la soudure.

La présente invention propose à cet effet une microsoudeuse pour raccorder entre elles des fibres optiques, telle que définie à la revendication 1.

Grâce à la microsoudeuse selon l'invention, il est possible d'effectuer deux types de déplacements : des déplacements de faible précision permettant de positionner les fibres avant le début de la soudure, et des déplacements de grande précision pour provoquer l'interpénétration des fibres puis la traction après la soudure. De plus, l'utilisation de cames de profil adapté confère une grande précision aux déplacements.

Selon une caractéristique importante, les premiers moyens de déplacement s'appuient directement sur les seconds moyens, les premiers et seconds moyens étant donc disposés en relation avec le support latéral mobile à l'extérieur de l'espace intermédiaire. Ceci permet d'effectuer facilement les déplacements de faible précision sans être gêné par la présence de la came.

Les premiers moyens de déplacement peuvent être constitués d'au moins un crayon micrométrique commandé par une molette d'avance manuelle.

On peut choisir de rendre l'autre des supports latéraux immobile, ou simplement capable d'effectuer les déplacements de faible précision (il est alors simplement en contact avec les premiers moyens de déplacement), ou encore simplement capable d'effectuer les déplacements de grande précision (il est alors simplement en relation avec les seconds moyens de déplacement).

Selon une caractéristique importante, chacun des supports latéraux est mobile et muni respectivement à la fois des premiers et des seconds moyens de déplacement.

Selon une autre caractéristique, le bâti et le support central sont d'un seul tenant et en plastique moulé. Dans ce cas, les supports latéraux sont évidés chacun à leur partie inférieure de contact avec le bâti, de sorte que ces parties inférieures ainsi amincies remplissent le rôle de charnières.

Ainsi, la microsoudeuse est peu onéreuse, et les mouvements de translation des supports latéraux sont obtenus en imposant à ces derniers des moments de flexion autour de l'axe horizontal passant par les charnières

Il est également possible, lorsque les supports latéraux sont indépendants du bâti, de les fixer au bâti par l'intermédiaire de pièces charnières.

Les moyens pour solidariser les fibres sur les supports latéraux peuvent être deux mandrins cylindriques métalliques fixés sur les supports latéraux par des aimants insérés à cet effet à l'intérieur des supports latéraux.

Les moyens de guidage précis sont par exemple deux vés de guidage usinés dans une céramique fixée au support central.

Avantageusement les électrodes sont disposées dans un plan horizontal contenant les moyens de guidage et orthogonalement à ces moyens de guidage.

Selon un perfectionnement supplémentaire, la microsoudeuse selon l'invention comporte en outre un dispositif optique pour l'observation des extrémités des fibres à souder. Ce dispositif comporte un microscope et des moyens optiques pour former, en combinaison avec le microscope, les images simultanées des extrémités selon deux axes de visée orthogonaux entre eux.

Ces moyens optiques peuvent être constitués de deux miroirs symétriques par rapport à un axe Y vertical orthogonal à l'axe longitudinal, inclinés chacun d'un angle α/2 par rapport à l'axe Y et situés sous une portion d'un plan horizontal contenant les extrémités des fibres, et en regard de cette portion. Ces miroirs peuvent être escamotables et amovibles.

La valeur de l'angle α peut varier autour de 135°, selon la précision du montage mécanique et le champ de visualisation du dispositif optique. Selon la focale choisie, on peut alors observer :
- les extrémités des fibres et des électrodes, en vue de dessus,
- les extrémités des fibres selon deux axes de visée orthogonaux entre eux.

Selon une variante du dispositif optique, les moyens optiques comprennent quatre miroirs situés au dessus de la portion de plan mentionnée ci-dessus, symétriques par rapport à l'axe Y, deux de ces miroirs étant parallèles et de part et d'autres de l'axe Y, les deux autres étant inclinés d'un angle β par rapport à l'axe Y et situés également de part et d'autre de cet axe ; la valeur de l'angle β peut varier autour de 45°.

Enfin, les électrodes peuvent être amovibles, pour permettre leur remplacement ou leur nettoyage en cas d'usure.

La microsoudeuse ainsi réalisée peut être utilisée dans un procédé de soudage comprenant une étape de réglage de la position moyenne des extrémités des fibres l'une par rapport à l'autre à l'aide des premiers moyens, puis une étape d'affinement de cette position et de déplacement de grande précision des extrémités à l'aide des seconds moyens.

Ce procédé peut comporter plus précisément les opérations suivantes :
- polissage des surfaces extrêmes et latérales de chacune des fibres avant mise en contact des extrémités des fibres,
- application d'un arc entre les électrodes et alors que les fibres ont été mises en contact en bout à l'aide des premiers moyens,
- soudage des fibres à l'arc avec interpénétration simultanée des fibres,
- recuit de la soudure ainsi effectuée,
- traction des fibres,
la traction étant effectuée selon un cycle continu directement après le recuit, le profil extérieur de la ou des cames étant adapté de sorte que la rotation de la ou des cames entraîne d'abord l'interpénétration des fibres puis maintienne cette interpénétration constante pendant le recuit, et enfin permette la traction des fibres, ces trois phases étant enchaînées sans interruption du mouvement de la ou des cames selon un cycle continu de mouvements de translation relatifs des fibres.

D'autres caractéristiques et des avantages de la présente invention apparaîtront dans la description suivante d'une mise en oeuvre de la microsoudeuse selon l'invention, donnée à titre illustratif mais nullement limitatif.

Dans les figures suivantes :
- la figure 1 est une vue schématique en perspective de la partie fonctionnelle d'une microsoudeuse selon l'invention,
- la figure 2 est une coupe d'une microsoudeuse selon l'invention,
- la figure 3 est une vue schématique transversale de la partie centrale de la figure 2,
- les figures 4 et 5 représentent les images obtenues à l'aide du dispositif optique de la figure 3,
- la figure 6 montre un autre dispositif optique possible pour une microsoudeuse selon l'invention,
- la figure 7 illustre un cycle de soudage d'une microsoudeuse selon l'invention.

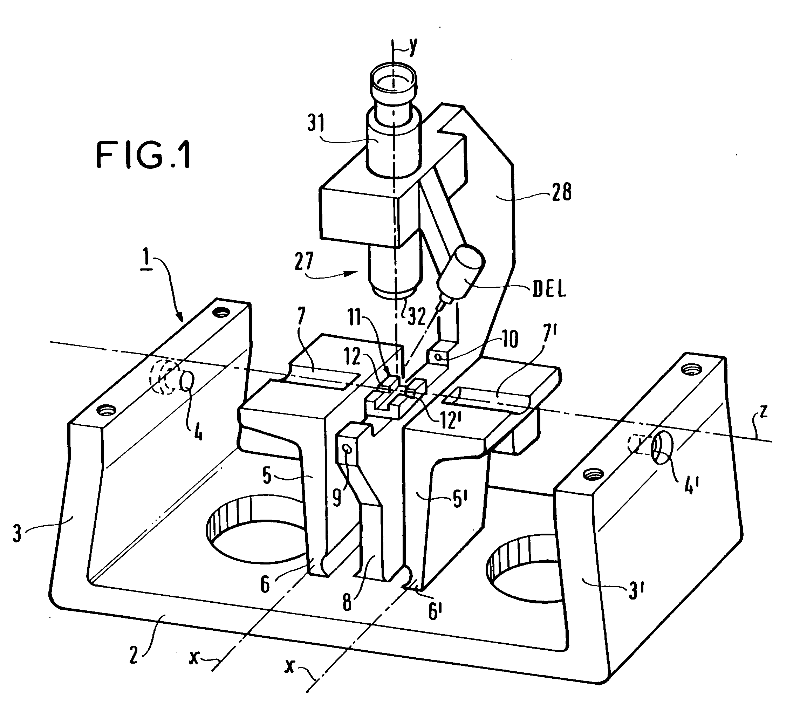

Dans les figures 1 à 6, les éléments communs sont référencés avec les mêmes numéros.

Dans la figure 1, un bâti 1 en plastique moulé comprend une base horizontale 2 avec à ses extrémités deux plaques verticales 3 et 3' conférant au bâti 1 la forme extérieure d'un U. Ces plaques comportent respectivement chacune un alésage 4 et 4' destiné à recevoir des moyens de déplacement préalable et de faible précision des fibres.

Deux supports latéraux verticaux 5 et 5' sont situés entre les plaques 3 et 3' et symétriques par rapport à l'axe de symétrie vertical Y du bâti.

Les supports latéraux 5 et 5' sont évidés à leur partie inférieure en contact avec la base 2, de manière à constituer deux parties amincies ou charnières 6 et 6' permettant à ces supports d'effectuer des mouvements sous l'action de moments de flexion autour d'un axe X horizontal et parallèle à la ligne de contact entre les supports 5 et 5' et la base 2. En outre, ils présentent chacun un usinage ouvert 7 et 7' en forme de demi-cylindre s'étendant selon l'axe horizontal Z orthogonal à l'axe X. Enfin, un support central vertical 8 destiné à recevoir notamment un dispositif optique et deux électrodes est situé entre les supports latéraux 5 et 5' et centré sur l'axe Y. Ce support central 8 présente deux alésages 9 et 10 destinés à recevoir chacun une électrode. En outre, un bloc 11 en céramique dans lequel ont été usinés deux vés de guidage 12 et 12' est fixé sur le support central 8 de sorte que les vés 12 et 12' soient situés le long de l'axe horizontal Z (orthogonal à l'axe X) et symétriques par rapport à l'axe Y. Avantageusement, dans le mode de réalisation décrit, la base 2, les plaques 3 et 3', les supports latéraux 5 et 5' et le support central 8 sont tous d'un seul tenant et en plastique moulé.

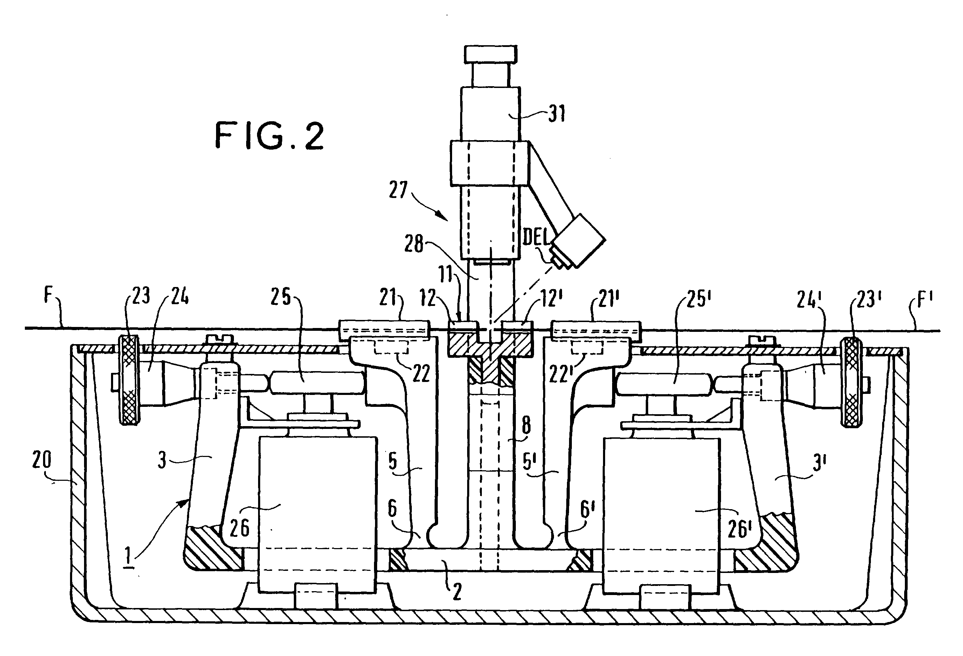

Dans la figure 2, on voit plus précisément les moyens utilisés pour solidariser les fibres au bâti, les déplacer et les souder. Dans un boîtier 20, on a installé le bâti 1 de la figure précédente.

Deux mandrins porte-fibre cylindriques en métal 21 et 21', dans lesquels les fibres F et F' sont respectivement fixées, sont fixés aux supports latéraux 5 et 5' par aimantation grâce à deux aimants 22 et 22' incorporés dans les supports latéraux 5 et 5' pendant le moulage ; les fibres F et F' ne sont pas en contact l'une avec l'autre. Les supports latéraux 5 et 5' peuvent effectuer des mouvements sous l'action de moments de flexion, comme cela a été expliqué à la figure précédente. Ces mouvements ont deux fonctions :
- mouvements de translation pour prépositionnement des fibres avant soudage ; ces mouvements ne nécessitent pas une très grande précision selon l'axe Z,
- mouvements de translation pour interpénétration lors du soudage et traction des fibres à froid après soudure ; ces mouvements doivent être très précis (à quelques micrométres près).

Les mouvements de faible précision des supports latéraux sont commandés manuellement par deux molettes d'avance manuelle 23 et 23' de deux crayons micrométriques 24 et 24' situés respectivement de part et d'autre des supports latéraux 5 et 5'. Le mouvement selon l'axe Z des crayons 24 et 24' fait avancer (ou reculer) les supports latéraux 5 et 5' de 20 µm par graduation des molettes 23 et 23' grâce aux propriétés élastiques du plastique et aux charnières 6 et 6'. Les crayons micrométriques 24 et 24' imposent en effet aux supports latéraux 5 et 5' une contrainte sous forme de moment de flexion.

Pour les mouvements de grande précision, on utilise deux cames 25 et 25' placées entre les crayons 24 et 24' et les supports latéraux 5 et 5'. Ces cames sont entraînées chacune par un micromoteur à courant continu 26 et 26'.

Ainsi, lorsque les moteurs 26 et 26' sont mis en marche ils font tourner les cames 25 et 25' autour d'un axe vertical orthogonal à l'axe Z, ce qui anime les fibres F et F' d'un mouvement de translation précis selon l'axe Z, ce mouvement de translation étant une fonction directe du profil extérieur des cames 25 et 25'. Par action sur les crayons micrométriques 24 et 24', on anime ainsi les supports latéraux 5 et 5' de mouvements de faible précision, et l'on déplace l'axe de rotation de chacune des cames dans un plan vertical parallèle à l'axe Z et contenant cet axe de rotation. On verra en détail plus loin le fonctionnement de la microsoudeuse ainsi conçue ainsi que le cycle de soudage particulier qu'elle permet d'obtenir.

Enfin, le support central 8 est surmonté et solidaire d'un support 28 qui porte un microscope 27 faisant partie du dispositif optique d'observation.

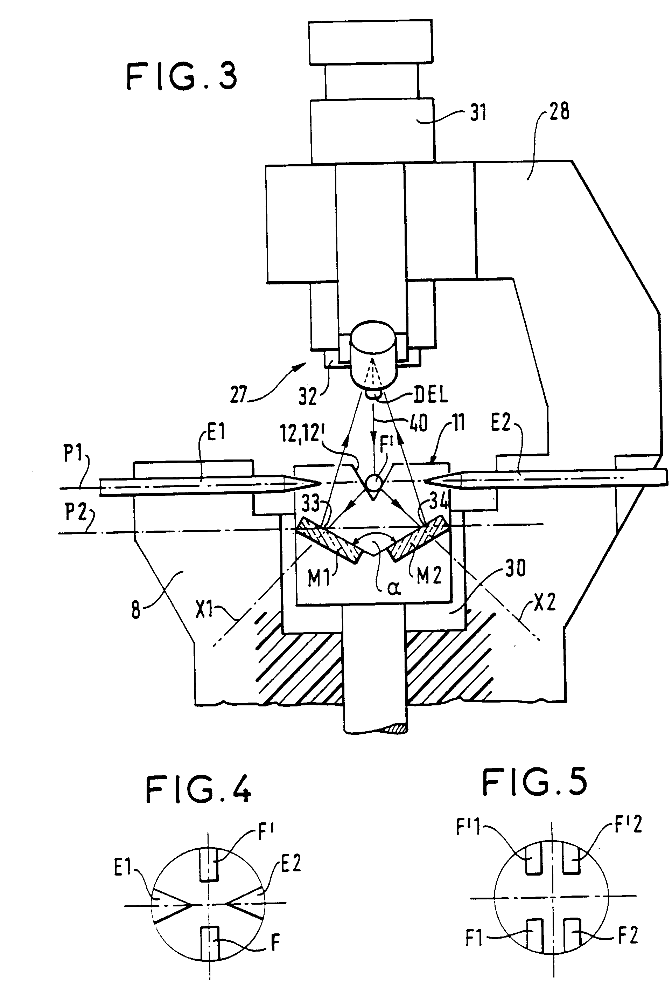

La figure 3 montre en détail le microscope 27 de la figure 2, ainsi que les principaux éléments du dispositif optique d'observation.

Dans cette figure, outre les deux électrodes E1 et E2, on peut voir une chambre 30 prévue dans le support 8 pour loger deux miroirs M1 et M2. Le microscope 27 comprend un monoculaire 31 à grossissement x50, un objectif 32 et une diode électro-luminescente DEL.

Les miroirs M1 et M2 sont situés sous une portion d'un plan horizontal P1 contenant les extrémités des électrodes E1 et E2 et des fibres à souder F et F′ (seule l'extrémité de F′ est visible dans la figure 3). Ils forment entre eux un angle α de 135°, et leur point d'intersection sur la figure 3 est situé à la verticale de la section de la fibre F′.

Grâce à cette disposition des miroirs M1 et M2, on peut observer les fibres F et F′ selon deux directions perpendiculaires.

Si l'on focalise l'objectif 32 sur le plan horizontal P1, on verra à travers le monoculaire 31, en vue de dessus, les images des deux fibres F et F′ (également notées F et F′) et des électrodes E1 et E2 (également notées E1 et E2) comme représenté à la figure 4. On peut ainsi vérifier l'état des électrodes, et les changer si elles sont usées. Ceci permet également de vérifier l'alignement et la position des fibres F et F′ l'une par rapport à l'autre.

Selon une autre possibilité, on peut observer sur la même image, les fibres F et F′ vues selon deux axes de visée perpendiculaires entre eux, X1 et X2. On a représenté, en trait continu, schématiquement à la figure 3 le trajet d'un faisceau 40 issu de la DEL lorsque l'objectif 32 est focalisé sur un plan horizontal P2 coupant les miroirs M1 et M2. Le faisceau 40 issu de la DEL transporte deux images 33 et 34 des deux fibres F et F′ en vis-à-vis respectivement sur les miroirs M1 et M2. Ces deux images sont renvoyées vers l'objectif 32 et l'on observe les fibres F et F′ selon deux directions orthogonales, comme représenté à la figure 5. On voit sur cette figure les images F1 et F′1 des fibres F et F′ selon l'axe de visée X1, et les images F2 et F′2 des fibres F et F′ selon l'axe de visée X2.

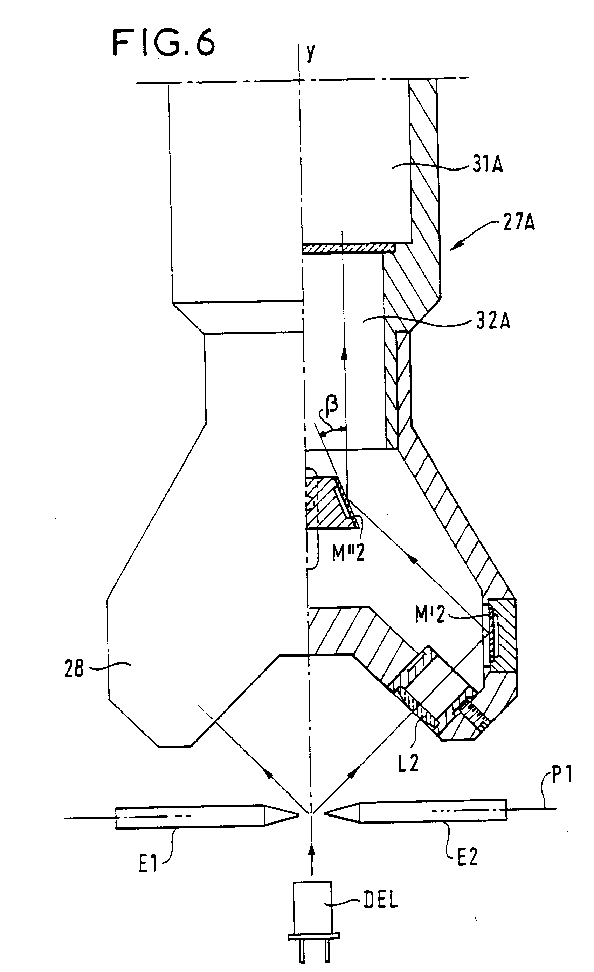

La figure 6 présente un autre dispositif optique possible pour une microsoudeuse selon l'invention. Ici, la chambre 30 du support 8 (non représentée) est prévue pour loger la DEL, et les miroirs sont au-dessus du plan P1 et logés dans le support 28. Le microscope 27A, comprenant un monoculaire 31A et un objectif 32A, est symétrique par rapport à l'axe Y, et on n'a représenté avec arrachement partiel que la moitié droite du dispositif optique où l'on voit en outre deux miroirs M′2 vertical et M˝2 incliné d'un angle β de 45° par rapport à l'axe Y, et une lentille L2. L'ensemble est logé dans le support 28.

On obtient les mêmes résultats qu'avec le dispositif optique de la figure 3.

La manipulation du dispositif optique est simple et performante car, pour avoir une image selon deux axes de visée perpendiculaires à la fois, il suffit d'un réglage rapide de l'objectif. Ce dispositif optique, dit "deux axes", permet également d'observer l'état des électrodes, et éventuellement de nettoyer ou changer ces dernières si besoin est.

Selon un mode opératoire possible de la microsoudeuse selon l'invention, on charge au préalable chacune des fibres F et F′ respectivement dans un mandrin 21 et 21′, puis on sectionne les fibres F et F′ afin :
- de laisser dépasser une longueur donnée de chaque fibre des mandrins 21 et 21′,
- d'obtenir des faces en regard de chacune des fibres à 90° par rapport à leur axe longitudinal.

On dispose ces mandrins dans les logements prévus à cet effet dans les supports latéraux 5 et 5′ puis on rapproche les deux fibres F et F′, sans les mettre en contact au moyen des crayons micrométriques 24 et 24′ mis en mouvement manuellement par les molettes d'avance 23 et 23′. Ceci a également pour conséquence de déplacer l'axe de rotation de chacune des cames 25 et 25′. On procède ensuite au polissage des surfaces extrêmes et latérales des fibres F et F′ par application d'un arc au moyen des électrodes E1 et E2, ceci notamment afin de brûler les poussières éventuelles encore présentes à ce stade sur les fibres F et F′. On peut alors enclencher le cycle continu spécifique à la microsoudeuse selon l'invention au moyen d'un bouton de commande situé sur la face avant (non représentée) du boîtier 20. Le profil des cames 25 et 25′ est choisi de manière à ce que, après leur mise en rotation par les moteurs 26 et 26′, leur premier effet soit d'entraîner une interpénétration des fibres F et F′, qui sont pendant ce temps fondues par l'arc produit par les électrodes pour que l'interpénétration soit possible. Puis, dans un second temps, la courbe de leur profil permet de maintenir les supports latéraux 5 et 5′ à une cote fixe pendant une période de recuit, enfin, dans un dernier temps et toujours de manière continue et automatique, sans aucune intervention extérieure, le profil des cames est tel que les supports latéraux 5 et 5′ reviennent progressivement à leur position initiale (grâce aux propriétés élastiques adaptées du plastique utilisé), ceci afin de permettre la traction nécessaire.

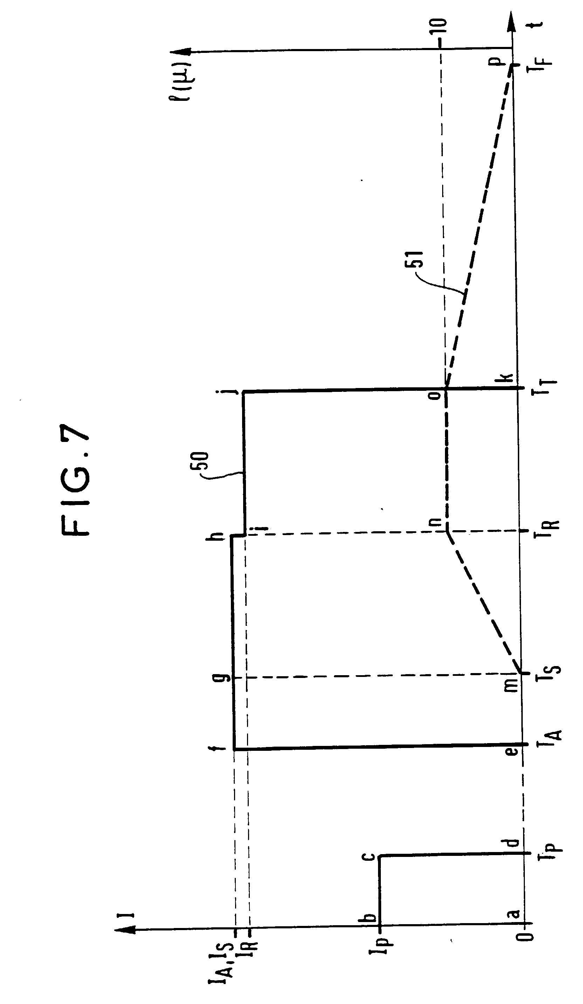

La courbe 50 en trait continu sur la figure 7 représente l'intensité I du courant d'arc entre les électrodes E1 et E2 en fonction du temps t.

La courbe 51 en trait interrompu représente la longueur 1 de l'interpénétration entre les fibres F et F′ en fonction du temps t.

Dans l'exemple illustré par les courbes 50 et 51, les fibres F et F′ ont pour diamètre 125µm.

La portion abcd de la courbe 50 montre l'intensité de polissage Ip, appliquée pendant un temps Tₚ suffisant pour supprimer entre autres les défauts de surface et les poussières.

Les fibres F et F′ sont ensuite (après un temps quelconque) amenées au contact l'une de l'autre toujours au moyen des crayons micrométriques 24 et 24′. On applique alors, à un instant T_{A}, un arc entre les électrodes pendant un temps suffisant pour permettre l'adhérence et la fusion des fibres. L'intensité du courant d'arc pendant cette phase, dite intensité d'adhérence, est notée I_{A}. La phase d'adhérence est représentée par la portion efg de la courbe 50 ; elle prépare la phase de soudage proprement dite.

A un instant Tₛ de fin de la phase d'adhérence débute le soudage ; on applique alors entre les électrodes un arc dont le courant a une intensité Is. Au même instant Tₛ, le micromoteur se met en marche et la rotation d'un tiers de tour des cames 25 et 25′ induit un mouvement de translation des fibres F et F′ conduisant à une interpénétration de ces deux fibres, d'une longueur de 10 µm ; cette interpénétration est linéaire en fonction du temps, et augmente à mesure que les fibres fondent sous l'effet de l'arc à plasma généré par les électrodes. Il est nécessaire de réaliser cette interpénétration, afin d'avoir une quantité de matière suffisante au niveau de la soudure.

La phase de soudage est représentée par la portion ghi de la courbe 50 et la phase d'interpénétration simultanée par la portion mn de la courbe 51.

Consécutivement à la phase de soudage débute, à un instant T_{R}, la phase de recuit, d'une durée suffisante pour éviter la trempe du verre composant les fibres optiques (la température de recuit est inférieure à la température de fusion du verre). L'intensité I_{R} du courant d'arc durant cette phase est plus faible que celle du courant d'arc de la phase de soudage, et adaptée au type des fibres à souder. Pendant cette phase de incuit, la rotation des cames n'entraîne pas d'interpénétration supplémentaire, et la longueur d'interpénétration reste constante et égale à 10 µm. A l'instant T_{T} de fin de recuit, les cames ont fait en tout un demi tour. La phase de recuit est représentée par la portion ijk de la courbe 50 et par la portion no de la courbe 51. Enfin, à l'instant T_{T} débute la traction : les cames reviennent à leur état initial d'avant soudure en terminant leur tour de rotation. Ceci permet, par élasticité du plastique composant les supports latéraux 5 et 5′, le retour progressif de ces supports, ce qui entraîne la traction des fibres F et F′ et ramène la longueur d'interpénétration à zéro à l'instant T_{F} (portion op de la courbe 51). L'allongement ainsi obtenu après retour à l'état initial est d'environ 0,3%.

Le coût de la microsoudeuse selon l'invention est environ trois fois moins élevé que celui des microsoudeuses classiques de l'art antérieur. Grâce à l'utilisation possible de pièces en plastique moulées, la microsoudeuse selon l'invention permet de raccorder une très large gamme de fibres optiques monomode ou multimode (diamètre compris entre 125 et 200 µm).

Elle permet donc des dépannages rapides à poste et la mesure de ligne par exemple. Elle réalise des soudures dont l'atténuation est inférieure au décibel, et en moyenne égale à 0,5 dB.

Bien entendu, la présente invention n'est pas limitée à la forme et au mode de mise en oeuvre qui viennent d'être décrits.

En particulier, il n'est pas nécessaire que les supports latéraux soient moulés avec le bâti. Ils peuvent être par exemple fixés à ce dernier par des pièces charnières leur permettant d'avoir des mouvements de flexion suffisants autour de l'axe X.

En outre, il est possible de n'utiliser qu'une seule came. On a alors une fibre dite "de référence" immobile pendant la soudure et la traction, et une fibre dite "mobile" solidaire d'un support latéral dont les mouvements suivent le profil de la came.

Les miroirs du système d'observation de la figure 2 peuvent être escamotables et amovibles. Ainsi, lors de l'application des arcs entre les électrodes, on les escamote pour éviter des dépôts de matière sur leur surface. De plus, on peut les changer s'ils sont abimés ou cassés, ou éventuellement les nettoyer s'ils sont poussiérieux.

La représentation schématique de la figure 7 n'est nullement limitative ; on peut choisir, selon le diamètre des fibres à souder, les différentes intensités Iₚ, I_{A}, Iₛ, I_{R} et les durées de chaque phase au moyen de touches et témoins de commande placés sur une face avant par exemple d'une microsoudeuse selon l'invention. De même, le profil de la (ou des) came(s) sera choisi en fonction des caractéristiques désirées de traction et d'interpénétration.

Il convient toutefois d'optimiser les caractéristiques choisies afin de permettre le maximum de soudures avec une autonomie acceptable de la microsoudeuse, dans le cas où cette dernière fonctionne avec une batterie rechargeable, avec des accumulateurs ou avec des piles jetables. La microsoudeuse selon l'invention peut également être branchée sur le secteur.

## Revendications

1. Microsoudeuse pour raccorder entre elles des fibres optiques (F, F'), comprenant :
- deux supports verticaux (5, 5'), appelés supports latéraux, raccordés à une base horizontale commune (2) de façon à former les branches d'un bâti (2, 5, 5') à section en forme de U, l'un au moins (5) desdits supports latéraux étant mobile en flexion ou en rotation autour d'un axe horizontal (X) situé à sa partie inférieure et s'étendant orthogonalement à ladite section en U dudit bâti, de façon à pouvoir être rapproché ou éloigné de l'autre support latéral (5'), et les sommets desdits supports latéraux étant destinés à porter chacun une portion d'extrémité d'au moins une fibre à souder, disposée de façon à s'étendre dans ladite section en U du bâti,
- des moyens (21, 22, 21', 22') pour solidariser les fibres optiques (F, F') sur lesdits sommets desdits supports latéraux (5, 5'),
- des électrodes (E1, E2) pour effectuer la soudure, et
- des premiers moyens de déplacement en flexion ou rotation de faible précision (23, 24) dudit support latéral mobile (5) pour rapprocher l'extremité de la fibre portée par ledit support mobile de l'extremité de la fibre portée par l'autre support, par un mouvement du sommet dudit support latéral mobile selon une direction de déplacement sensiblement parallèle à l'axe longitudinal des fibres ladite microsoudeuse étant caractérisée en ce que ledit bâti comporte en outre :
- un support central (8) disposé dans l'espace intermédiaire situé entre lesdits supports latéraux (5, 5') et muni de moyens de guidage (12,12') des extrémités des fibres à souder en regard l'une de l'autre, et
- des seconds moyens de déplacement en flexion ou rotation de grande précision (25, 26) dudit support latéral mobile (5) pour animer l'extremité de la fibre portée par ledit support mobile de mouvements de translation précis le long de son axe longitudinal, par des mouvements sensiblement correspondants du sommet dudit support latéral mobile selon une direction de déplacement sensiblement paralléle à l'axe longitudinal des fibres, lesdits seconds moyens étant constitués d'une came (25) s'appuyant en permanence sur ledit support latéral mobile (5) à l'extérieur dudit espace intermédiaire et capable d'effectuer des mouvements de rotation autour d'un axe vertical orthogonal audit axe longitudinal des fibres, lesdits premiers moyens (23, 24) de déplacement de faible précision dudit support latéral mobile étant reliés à ladite came de façon à entraîner le déplacement dudit axe de rotation de ladite came (25) dans un plan vertical contenant ledit axe de rotation et parallèle audit axe longitudinal des fibres, afin d'assurer le maintien dudit appui permanent de ladite came sur ledit support latéral mobile lors du deplacement de ce dernier par lesdits premiers moyens de déplacement de faible precision.

2. Microsoudeuse selon la revendication 1, caractérisée en ce que lesdits premiers moyens de déplacement (23, 24) s'appuient directement sur lesdits seconds moyens de deplacement (25, 26), lesdits premiers et second moyens étant ainsi disposés en relation avec ledit support latéral mobile à l'extérieur dudit espace intermédiaire.

3. Microsoudeuse selon l'une des revendications 1 ou 2, caractérisée en ce que chacun desdits supports latéraux (5, 5') est mobile et muni respectivement à la fois desdits premiers moyens (23, 24 ; 23', 24') et desdits seconds moyens (25, 26 ; 25', 26') de déplacement.

4. Microsoudeuse selon l'une des revendications 1 à 3, caractérisée en ce que lesdits premiers moyens de déplacement (23, 24 ; 23', 24') sont constitués d'au moins un crayon micrométrique (24, 24') commandé par une molette d'avance manuelle (23, 23').

5. Microsoudeuse selon l'une des revendications 1 à 4, caractérisée en ce que ledit bâti en U (2, 5, 5') et ledit support central (8) sont d'un seul tenant et en plastique moulé.

6. Microsoudeuse selon l'une des revendications 1 à 5, caractérisée en ce que, lesdits supports latéraux (5, 5') étant moulés avec ledit bâti, ils sont évidés chacun à leur partie inférieure de sorte que lesdites parties inférieures ainsi amincies remplissent le rôle de charnières (6, 6').

7. Microsoudure selon l'une des revendications 1 à 5, caractérisée en ce que lesdits supports latéraux (5, 5') sont fixés audit bâti par l'intermédiaire de pièces charnières.

8. Microsoudeuse selon l'une des revendications 1 à 7, caractérisée en ce que lesdits moyens (21, 22 ; 21' 22') pour solidariser lesdites fibres sur lesdits supports latéraux sont deux mandrins porte-fibre (21, 21') cylindriques et métalliques fixés sur lesdits supports latéraux par des aimants (22, 22') insérés à cet effet à l'intérieur desdits supports latéraux.

9. Microsoudeuse selon l'une des revendications 1 à 8, caractérisée en ce que lesdits moyens de guidage précis desdites fibres sont deux vés de guidage (12, 12') usinés dans une céramique fixée sur ledit support central (8).

10. Microsoudeuse selon l'une des revendications 1 à 9, caractérisée en ce que lesdites électrodes (E1, E2) sont disposées dans un plan horizontal contenant lesdits moyens de guidage (12, 12') et orthogonalement auxdits moyens de guidage.

11. Microsoudeuse selon l'une des revendications 1 à 10, caractérisée en ce qu'elle comporte en outre un dispositif optique pour l'observation des extrémités desdites fibres, comportant un microscope (27, 27A) et des moyens optiques (M1, M2 ; M'1, M"1 ; M'2, M"2 ; L1, L2) pour former, en combinaison avec ledit microscope, les images simultanées desdites extrémités selon deux axes de visée (X1, X2) orthogonaux entre eux sur un seul écran.

12. Microsoudeuse selon la revendication 11, caractérisée en ce que lesdits moyens sont constitués de deux miroirs (M1, M2) symétriques par rapport à un axe Y vertical orthogonal audit axe longitudinal, inclinés chacun d'un angle α/2 par rapport audit axe Y et situés sous une portion d'un plan horizontal contenant lesdites extrémités desdites fibres, et en regard de ladite portion.

13. Microsoudeuse selon la revendication 11, caractérisée en ce que lesdits moyens optiques comprennent quatre miroirs (M'1, M"1 ; M'2, M"2) situés au-dessus d'une portion d'un plan horizontal contenant lesdites extrémités desdites fibres, symétriques par rapport à un axe Y vertical orthogonal audit axe longitudinal, deux desdits miroirs (M'1, M'2) étant parallèles et de part et d'autre de l'axe Y et les deux autres (M"1, M"2) étant inclinés d'un angle β par rapport à l'axe Y et situés également de part et d'autre dudit axe Y.

14. Microsoudeuse selon l'une des revendications 11 ou 12, caractérisée en ce que lesdits miroirs sont escamotables et amovibles.

15. Microsoudeuse selon la revendication 12, caractérisée en ce que la valeur de l'angle a est de 135°.

16. Microsoudeuse selon la revendication 13, caractérisée en ce que la valeur de l'angle β est de 45°.

17. Microsoudeuse selon l'une des revendications 1 à 16, caractérisée en ce que lesdites électrodes (E1, E2) sont amovibles.

18. Procédé de soudage faisant usage de la microsoudeuse selon l'une des revendications 1 à 17, caractérisé en ce qu'il comprend une étape de réglage de la position moyenne des extrémités des fibres l'une par rapport à l'autre à l'aide desdits premiers moyens (23, 24 ; 23' 24'), puis une étape d'affinement de ladite position et de déplacement de grande précision desdites extrémités à l'aide desdits seconds moyens (25, 26 ; 25', 26').

19. Procédé selon la revendication 18, caractérisé en ce qu'il comporte les opérations suivantes :
- polissage des surfaces extrémales et latérales de chacune des portions d'extrémité des fibres avant mise en contact desdites surface extrémales desdites fibres,
- application d'un arc entre lesdites électrodes (E1, E2) et alors que lesdites fibres ont été mises en contact bout à bout à l'aide desdits premiers moyens (23, 24; 23', 24'),
- soudage desdites fibres à l'arc avec interpénétration simultanée desdites fibres,
- recuit de la soudure ainsi effectuée,
- traction desdites fibres,
ladite traction étant effectuée selon un cycle continu directement après ledit recuit, le profil extérieur de la ou desdites cames (25, 25') étant adapté de sorte que la rotation de la ou desdites cames entraîne d'abord ladite interpénétration desdites fibres puis maintienne cette interpénétration constante pendant ledit recuit, et enfin permette ladite traction desdites fibres, ces trois phase étant enchaînées sans interruption du mouvement de la ou desdites cames selon un cycle continu de mouvements de translation relatifs desdites fibres.

## Patentansprüche

1. Mikroschweißgerät zum gegenseitigen Anschluß von Lichtleitfasern (F, F'),
- mit zwei vertikalen Trägern (5, 5'), seitliche Träger genannt, die mit einer gemeinsamen waagrechten Basis (2) so verbunden sind, daß sie die Zweige eines Gestells (2, 5, 5') in U-Form bilden, wobei mindestens einer der seitlichen Träger (5) um eine in seinem unteren Bereich liegende und sich senkrecht zum Querschnitt des U des Gestells erstrekkende waagrechte Achse (X) verbogen oder verdreht werden kann, so daß man diesen seitlichen Träger an den anderen seitlichen Träger (5') annähern oder von ihm entfernen kann, wobei die Oberseiten der seitlichen Träger je einen Endbereich mindestens einer zu verschweißenden Faser tragen, die sich in dem U-förmigen Querschnitt des Gestells erstreckt,
- mit Mitteln (21, 22, 21', 22'), um die Lichtleitfasern (F, F') auf den Oberseiten der seitlichen Träger (5, 5') festzulegen,
- mit Elektroden (E1, E2), um die Schweißung durchzuführen,
- und mit ersten Verschiebemitteln (23, 24) mit geringer Genauigkeit für den seitlichen beweglichen Träger (5') mittels Biegung oder Drehung, um das Ende der von dem beweglichen Träger getragenen Lichtleitfaser an das Ende der von dem anderen Träger getragenen Lichtleitfaser durch eine Bewegung der Oberseite des beweglichen seitlichen Trägers in einer Verschieberichtung anzunähern, die im wesentlichen parallel zur Längsachse der Lichtleitfasern verläuft, dadurch gekennzeichnet, daß das Gestell weiter enthält:
- einen zentralen Träger (8), der im Zwischenraum zwischen den beiden seitlichen Trägern (5, 5') liegt und Führungsmittel (12, 12') für die Enden der einander gegenüberliegenden zu verschweißenden Fasern besitzt,
- zweite Verschiebemittel (25, 26) großer Genauigkeit für den beweglichen seitlichen Träger (5) mittels Biegung oder Drehung, um das Ende der auf dem beweglichen Träger sitzenden Lichtleitfasern genau entlang von deren Längsachse durch im wesentlichen entsprechende Bewegungen der Oberseite des beweglichen seitlichen Trägers gemäß einer im wesentlichen zur Längsachse der Fasern parallelen Verschieberichtung zu verschieben, wobei die zweiten Mittel von einer Nockenscheibe (25) gebildet werden, die permanent auf den beweglichen seitlichen Träger (5) außerhalb des Zwischenraums drückt und Drehbewegungen um eine senkrechte Achse ausführen kann, die senkrecht zur Längsachse der Fasern verläuft, wobei die ersten Mittel (23, 24) zur Verschiebung des beweglichen seitlichen Trägers mit geringer Genauigkeit mit der Nockenscheibe so verbunden sind, daß sie zu einer Verschiebung der Drehachse der Nockenscheibe (25) in einer senkrechten Ebene führen, die die Drehachse einschließt und parallel zur Längsachse der Fasern verläuft, um die Nockenscheibe permanent an dem beweglichen seitlichen Träger während der Verschiebung dieses Trägers durch die ersten Verschiebemittel geringer Genauigkeit in Anlage zu halten.

2. Mikroschweißgerät nach Anspruch 1, dadurch gekennzeichnet, daß die ersten Verschiebemittel (23, 24) sich unmittelbar auf den zweiten Verschiebemitteln (25, 26) abstützen, wobei die ersten und zweiten Verschiebemittel mit dem beweglichen seitlichen Träger außerhalb des Zwischenraums in Verbindung stehen.

3. Mikroschweißgerät nach einem der Ansprüche 1 oder 2, dadurch gekennzeichnet, daß jeder der seitlichen Träger (5, 5') beweglich ist und je erste Mittel (23, 24; 23', 24') und zweite Mittel (25, 26; 25', 26') zur Verschiebung besitzt.

4. Mikroschweißgerät nach einem der Ansprüche 1 bis 3, dadurch gekennzeichnet, daß die ersten Verschiebemittel (23, 24; 23', 24') von mindestens einem Mikrometerstift (24, 24') gebildet werden, der von einem Handrad (23, 23') gesteuert wird.

5. Mikroschweißgerät nach einem der Ansprüche 1 bis 4, dadurch gekennzeichnet, daß das U-förmige Gestell (2, 5, 5') und der zentrale Träger (8) von einem gemeisamen Bauteil aus gegossenem Kunststoff gebildet werden.

6. Mikroschweißgerät nach einem der Ansprüche 1 bis 5, dadurch gekennzeichnet, daß die seitlichen Träger (5, 5') mit dem Gestell zusammen gegossen werden und je an ihrem unteren Bereich so ausgehöhlt sind, daß ihre unteren so geschwächten Bereiche die Aufgabe von Scharnieren (6, 6') übernehmen.

7. Mikroschweißgerät nach einem der Ansprüche 1 bis 5, dadurch gekennzeichnet, daß die seitlichen Träger (5, 5') am Gestell über Scharnierteile befestigt sind.

8. Mikroschweißgerät nach einem der Ansprüche 1 bis 7, dadurch gekennzeichnet, daß die Mittel (21, 22; 21', 22') zur Festlegung der Fasern auf den seitlichen Trägern zwei Metallzylinder (21, 21') sind, die auf den seitlichen Trägern durch Magnete (22, 22') festgehalten werden, die zu diesem Zweck in die seitlichen Träger eingesetzt sind.

9. Mikroschweißgerät nach einem der Ansprüche 1 bis 8, dadurch gekennzeichnet, daß die Mittel zur genauen Führung der Fasern zwei V-förmige Rillen (12, 12') sind, die in ein Keramikteil eingeschnitten sind, das auf dem zentralen Träger (8) befestigt ist.

10. Mikroschweißgerät nach einem der Ansprüche 1 bis 9, dadurch gekennzeichnet, daß die Elektroden (E1, E2) in einer waagrechten Ebene liegen, die die Führungsmittel (12, 12') enthält, und senkrecht zu den Führungsmitteln verlaufen.

11. Mikroschweißgerät nach einem der Ansprüche 1 bis 10, dadurch gekennzeichnet, daß es außerdem eine optische Vorrichtung zur Beobachtung der Enden der Lichtleitfasern enthält, zu der ein Mikroskop (27, 27A) und optische Mittel (M1, M2; M'1, M"1; M'2, M"2, L1, L2) gehören, um in Verbindung mit dem Mikroskop gleichzeitig Bilder der Enden der Lichtleitfasern gemäß zwei zueinander senkrechten Beobachtungsachsen (X1, X2) auf einem gemeinsamen Bildschirm zu erzeugen.

12. Mikroschweißgerät nach Anspruch 11, dadurch gekennzeichnet, daß die Mittel aus zwei symmetrisch bezüglich einer senkrechten Achse Y, die zur Längsachse senkrecht verläuft, angeordneten Spiegel (M1, M2) besteht, die je um einen Winkel α/2 bezüglich der Achse Y geneigt sind und sich unter einem Bereich einer horizontalen Ebene befinden, in der die Enden der Fasern liegen, und diesem Bereich gegenüber.

13. Mikroschweißgerät nach Anspruch 11, dadurch gekennzeichnet, daß die optischen Mittel vier Spiegel (M'1, M"1; M'2, M"2) enthalten, die oberhalb eines Bereichs einer waagrechten Ebene liegen, die die Enden der Fasern enthält, wobei die Spiegel symmetrisch bezüglich einer senkrechten und zur Längsachse orthogonalen Achse Y angeordnet sind und zwei dieser Spiegel (M'1, M'2) parallel zur Achse Y und zu beiden Seiten dieser Achse Y angeordnet sind, während die beiden anderen Spiegel (M"1, M"2) um eine Winkel β bezüglich der Achse Y geneigt und zu beiden Seiten dieser Achse Y angeordnet sind.

14. Mikroschweißgerät nach einem der Ansprüche 11 oder 12, dadurch gekennzeichnet, daß die Spiegel schwenkbar und entfernbar sind.

15. Mikroschweißgerät nach Anspruch 12, dadurch gekennzeichnet, daß der Winkel α den Wert 135° hat.

16. Mikroschweißgerät nach Anspruch 13, dadurch gekennzeichnet, daß der Winkel β den Wert 45° hat.

17. Mikroschweißgerät nach einem der Ansprüche 1 bis 16, dadurch gekennzeichnet, daß die Elektroden (E1, E2) austauschbar sind.

18. Schweißverfahren unter Verwendung des Mikroschweißgeräts gemäß einem der Ansprüche 1 bis 17, dadurch gekennzeichnet, daß es einen Verfahrensschritt der Einstellung der mittleren Lage der Enden der Fasern zueinander mit Hilfe der ersten Mittel (23, 24; 23', 24') und dann einen Verfahrensschritt der Feineinstellung dieser Lage und der Verschiebung der Enden der Fasern mit großer Genauigkeit mit Hilfe der zweiten Mittel (25, 26; 25', 26') aufweist.

19. Verfahren nach Anspruch 18, dadurch gekennzeichnet, daß es die folgenden Schritte enthält:
- die endseitigen und seitlichen Oberflächen jedes der Endabschnitte der Fasern werden poliert, ehe die Endflächen miteinander in Kontakt kommen;
- ein Lichtbogen wird zwischen den Elektroden (E1, E2) gezündet, nachdem die Lichtleitfasern stirnseitig mit Hilfe der ersten Mittel (23, 24; 23', 24') in Kontakt gebracht wurden;
- die Fasern werden über den Lichtbogen verschweißt, wobei sie gleichzeitig ineinander eindringen;
- die Schweißnaht wird thermisch nachbehandelt;
- die Fasern werden einer Zugkraft ausgesetzt, und zwar in einem kontinuierlichen Zyklus unmittelbar nach der Wärmenachbehandlung, wobei das Außenprofil der Nockenscheibe oder -scheiben (25, 25') so gewählt ist, daß die Drehung der Scheibe oder Scheiben zuerst die Fasern ineinander eindringen läßt, dann während der Nachbehandlung diese Lage beibehalten wird und schließlich die Zugbelastung erfolgt, wobei diese drei Phasen ohne Unterbrechung der Bewegung der Nokkenscheibe oder -scheiben gemäß einem kontinuierlichen Zyklus von relativen Translationsbewegungen der Fasern aufeinanderfolgen.

## Claims

1. A micro-welder for connecting optical fibers (F, F') together, the micro-welder comprising:
two vertical supports (5, 5') called "lateral" supports connected to a common horizontal base (2) in order to form the branches of a stand (2, 5, 5') of U-shaped section, at least one of said lateral supports (5) being movable in bending or rotation about a horizontal axis (X) situated at its bottom and extending orthogonally to said U-shaped section of said stand, enabling it to move towards or away from the other lateral support (5'), and each of the tops of said lateral supports being designed to carry an end portion of at least one fiber to be welded, disposed so as to extend into said U-shaped section of the stand;
means (21, 22, 21' 22') for securing the optical fibers (F, F') to said tops of said lateral supports (5, 5');
electrodes (E1, E2) for performing the welding; and
first displacement means of low accuracy (23, 24) for displacing in bending or rotation said moving lateral support (5) to move the end of the fiber carried by said moving support towards the end of the fiber carried by the other support by moving the top of said moving lateral support along a displacement direction substantially parallel to the longitudinal axis of said fibers;
said micro-welder being characterized in that said stand further includes:
a central support (8) lying in an intermediate space between said lateral supports (5, 5') and provided with guide means (12, 12') for guiding the ends of the fibers to be welded together so that they face one another; and
second displacement means of high accuracy (25, 26) for displacing in bending or rotation said moving lateral support (5) to drive the end of the fiber carried by said moving support through accurate translation movements along its longitudinal axis, by substantially corresponding movements from the top of said moving lateral support along a displacement direction substantially parallel to the longitudinal axis of the fibers, said second means being constituted by a cam (25) permanently bearing against said moving lateral support (5) from the outside of said intermediate space and capable of performing rotary motion about a vertical axis orthogonal to said longitudinal axis of the fibers, said first displacement means (23, 24) of low accuracy for displacing said moving lateral support being connected to said cam so as to drive the displacement of said axis of rotation of said cam (25) in a vertical plane that contains said axis of rotation and that is parallel to said longitudinal axis of the fibers, in order to ensure that said cam is kept bearing continuously against said moving lateral support during displacement thereof by said first displacement means of low accuracy.

2. A micro-welder according to claim 1, characterized in that said first displacement means (23, 24) press directly against said second displacement means (25, 26), said first and second displacement means thus being disposed relative to said moving lateral support on the outside of said intermediate space.

3. A micro-welder according to claim 1 or 2, characterized in that each of said lateral supports (5, 5') is moving and provided respectively with both its own one of said first displacement means (23, 24; 23', 24') and its own one of said second displacement means (25, 26; 25', 26').

4. A micro-welder according to any one of claims 1 to 3, characterized in that said first displacement means (23, 24; 23', 24') are constituted at least by a micrometer spindle (24, 24') controlled by a manual advance knob (23, 23').

5. A micro-welder according to any one of claims 1 to 4, characterized in that said U-shaped stand (2, 5, 5') and said central support (8) are integral and made of molded plastic.

6. A micro-welder according to any one of claims 1 to 5, characterized in that said lateral supports (5, 5') are molded with said stand and each of them is recessed at its bottom end so that said bottom ends of thickness reduced in this manner act as hinges (6, 6').

7. A micro-welder according to any one of claims 1 to 5, characterized in that said lateral supports (5, 5') are fixed to said stand via hinge components.

8. A micro-welder according to any one of claims 1 to 7, characterized in that said means (21, 22; 21', 22') for securing said fibers on said lateral supports are two cylindrical fiber-carrying mandrels (21, 21') made of metal and fixed on said lateral supports by magnets (22, 22') inserted for this purpose inside said lateral supports.

9. A micro-welder according to any one of claims 1 to 8, characterized in that said accurate guide means for said fibers are two V-shaped guides (12, 12') machined in a piece of ceramics fixed on said central support (8).

10. A micro-welder according to any one of claims 1 to 9, characterized in that said electrodes (E1, E2) are disposed in a horizontal plane containing said guide means (12, 12') and extending orthogonally to said guide means.

11. A micro-welder according to any one of claims 1 to 10, characterized in that it further includes an optical device for observing the ends of said fibers, the optical device comprising a microscope (27, 27A) and optical means (M1, M2; M'1, M"1; M'2, M"2; L1, L2) for co-operating with said microscope to form simultaneous images of said ends on a single screen and as seen along two mutually orthogonal viewing directions (X1, X2).

12. A micro-welder according to claim 11, characterized in that said means are constituted by two mirrors (M1, M2) that are symmetrical about a vertical Y-axis orthogonal to said longitudinal axis, each mirror being inclined at an angle α/2 relative to said Y-axis and being situated in a portion of a horizontal plane containing said ends of said fibers, and facing said portion.

13. A micro-welder according to claim 11, characterized in that said optical means comprise four mirrors (M'1, M"1; M'2, M"2) situated above a portion of a horizontal plane containing said ends of said fibers, said mirrors being disposed symmetrically about a vertical Y-axis orthogonal to said longitudinal axis, two of said mirrors (M'1, M'2) being parallel and on opposite sides of the Y-axis and the other two mirrors (M"1, M"2) being inclined at an angle β relative to the Y-axis and likewise being situated on opposite sides of said Y-axis.

14. A micro-welder according to claim 11 or 12, characterized in that said mirrors are retractable and removable.

15. A micro-welder according to claim 12, characterized in that the value of the angle α is 135°.

16. A micro-welder according to claim 13, characterized in that the value of the angle β is 45°.

17. A micro-welder according to any one of claims 1 to 16, characterized in that said electrodes (E1, E2) are removable.

18. A welding method making use of the micro-welder according to any one of claims 1 to 17, the method being characterized in that it comprises a step of adjusting the mean position of the ends of the fibers relative to one another by using said first means (23, 24; 23', 24'), and then a step of finely adjusting said position and of displacing said ends with high accuracy using said second means (25, 26; 25', 26').

19. A method according to claim 18, characterized in that it includes the following operations:
polishing the end and side surfaces of the end portions of the fibers before putting said end surfaces of said fibers into contact with each other;
striking an arc between said electrodes (E1, E2) when said fibers have been put into end-to-end contact using said first means (23, 24; 23', 24');
arc welding said fibers while simultaneously causing the fibers to interpenetrate;
annealing the weld formed in this way;
applying traction to said fibers;
said traction being applied in a continuous cycle directly after said annealing, the outside profile of said cam(s) (25, 25') being adapted so that rotation of said cam(s) firstly causes said fibers to interpenetrate, then maintains said interpenetration constant during said annealing, and finally enables said traction to be applied to said fibers, these three stages following one another without interruption in the motion of the cam(s) in a continuous cycle of relative translation movements of said fibers.
